# EUROPÄISCHE PATENTANMELDUNG

(11) **EP 4 108 552 A1**
(43) Veröffentlichungstag der Anmeldung: **28.12.2022**
(21) Anmeldenummer: 21181300.1
(22) Anmeldetag: 24.06.2021
(51) Int. Cl.: B62D 25/08, B62D 27/02, B62D 29/00

(54) **MG-STRUKTURBAUTEIL**

(71) Anmelder: GF Casting Solutions AG, 8201 Schaffhausen (CH)
(72) Erfinder: Philipp, Stephan, 78262 Gailingen (DE); Kohlbrenner, Fabian, 79862 Hoechenschwand (DE); Engelbrecht, Maren, 78337 Oehningen (DE); Just, Michael, 8213 Neunkirch (CH)
(74) Vertreter: Fenner, Seraina

(57) **Zusammenfassung**

Verfahren zum Verbinden von Strukturbauteilen in einer Vorderwagenstruktur, wobei das Strukturbauteil als Mg-Strukturbauteil ausgebildet ist und im Mg-Druckgussverfahren hergestellt und mit mindestens einem Bauteil der Vorderwagenkarosserie verbunden wird, wobei die Bauteile der Vorderwagenkarosserie aus Aluminium oder Stahl gebildet sind, wobei das Mg-Strukturbauteil direkt mit dem Bauteil der Vorderwagenkarosserie aus Aluminium oder Stahl durch ein Fügeverfahren verbunden wird.

## Beschreibung

Die Erfindung betrifft ein Verfahren zum Verbinden von Strukturbauteilen in einer Vorderwagenstruktur und eine erfindungsgemässe Baugruppe, wobei das Strukturbauteil als Mg-Strukturbauteil ausgebildet ist und im Mg-Druckgussverfahren hergestellt wird und mittels eines Bauteils der Vorderwagenkarosserie verbunden wird, wobei die Bauteile der Vorderwagenkarosserie aus Aluminium oder Stahl gebildet sind.

Aus dem Stand der Technik sind Verbindungen zwischen Strukturbauteilen bekannt die als Aluminiumdruckgussbauteile hergestellt sind und mit einem tragenden Bauteil der Fahrzeugkarosserie verbunden sind.

Die EP 1 084 939 A1 zeigt eine Federbeinaufnahme aus Aluminiumdruckguss, wobei die Federbeinaufnahme mit einem Motorträger verbunden ist der ebenfalls aus Aluminium hergestellt ist.

Da Aluminium nicht direkt mit einem anderen Bauteil aus Stahl verschweisst werden kann, offenbart die DE 197 46 165 A1 ein Verfahren bei dem das Leichtmetallbauteil mit einem Zusatzbauteil verbunden wird, welches dann mit der Fahrzeugkarosserie aus Stahl verschweisst wird.

Die EP 1 912 850 A1 offenbart eine Kraftfahrzeugkarosserie bei dem eine Federbeinaufnahme aus Aluminium besteht und diese durch Stanznieten mit einer Kraftfahrzeugkarosserie aus einem Eisenwerkstoff verbunden ist.

Der Nachteil an den oben aufgezeigten Verfahren und Bauteilen ist, dass sie ein hohes Gewicht aufweisen und dadurch die Fahrzeuge einen hohen Treibstoffverbrauch haben.

Es ist Aufgabe der Erfindung ein Verfahren und ein damit verbundenes Strukturbauteil vorzuschlagen, welches eine Gewichtseinsparung mit sich bringt und dadurch eine Treibstoffverbrauchsreduktion.

Diese Aufgabe wird erfindungsgemäss dadurch gelöst, dass das Mg-Strukturbauteil direkt mit dem Bauteil der Vorderwagenkarosserie aus Aluminium oder Stahl durch ein Fügeverfahren verbunden wird. Die Verwendung eines Strukturbauteils aus Magnesium bringt eine ungefähre Gewichtseinsparung von 1/3 gegenüber einem Aluminiumbauteil.

Das erfindungsgemässe Verfahren zum Verbinden von Strukturbauteilen in einer Vorderwagenstruktur weist ein Strukturbauteil aus Magnesium auf, wobei das Mg-Strukturbauteil im Mg-Druckgussverfahren hergestellt wird. Das Mg-Strukturbauteil wird mittels eines Bauteils der Vorderwagenkarosserie verbunden, wobei die Bauteile der Vorderwagenkarosserie aus Aluminium oder Stahl gebildet sind. Das Mg-Strukturbauteil wird direkt mit dem Bauteil der Vorderwagenkarosserie aus Aluminium oder Stahl durch ein Fügeverfahren verbunden. Es wird kein weiteres Teil zwischen dem Mg-Strukturbauteil und dem Bauteil der Vorderwagenkarosserie aus Aluminium oder Stahl eingesetzt. Die Oberflächen des Mg-Strukturbauteils und des Bauteils der Vorderwagenkarosserie aus Aluminium oder Stahl kontaktieren sich gegenseitig.

Als Vorderwagenstruktur wird üblicherweise der Bereich der Fahrzeugkarosserie der sich in Fahrtrichtung vor der Fahrgastzelle befindet bezeichnet.

Vorzugsweise wird zum Fügen des Mg-Strukturbauteils und des Bauteils der Vorderwagenkarosserie aus Aluminium oder Stahl Widerstandselementschweissen oder Reibelementschweissen oder Reibpunktschweissen oder Reibrührschweissen oder ein Fleisslochschrauben angewandt.

Der Vorteil des erfindungsgemässen Verfahrens liegt auch darin, dass das Mg-Strukturbauteil direkt mit einem Aluminium oder Stahlbauteil durch ein Fügeverfahren verbindbar ist.

Beim Einsatz des Fügens durch Widerstandselementschweissen wird ein Fügehilfselement in das Mg-Strukturbauteil eingebacht, vorzugsweise durch Einpressen und bei Raumtemperatur. Als Fügehilfselemente werden die aus dem Stand der Technik bekannten Geometrien, welche aus einem leitendem Werkstoff sind eingesetzt. Nach dem Einbringen des Fügehilfselements in das Mg-Strukturbauteil wird das Mg-Strukturbauteil am Bauteils der Vorderwagenkarosserie aus Aluminium oder Stahl platziert bzw. sie überlappen sich, so dass das Mg-Strukturbauteil über das Fügehilfselement mit dem Bauteil der Vorderwagenkarosserie aus Aluminium oder Stahl durch Punktschweissen verbunden wird. Hierbei handelt es sich um ein zweistufiges Verfahren bei dem zuerst wie oben beschrieben das Fügehilfselement in das Mg-Strukturbauteil eingebracht wird und anschliessen die beiden Bauteile aneinander platziert werden und über das Fügehilfselement punktverschweisst werden.

Beim Einsatz des Fügens durch Reibelementschweissen wird mittels eines rotierenden Reibelements das Mg-Strukturbauteil durchdrungen und durch die rotatorische Reibung mittels dem Reibelement das direkt an das Mg-Strukturbauteil anliegende bzw. überlappende Bauteil der Vorderwagenkarosserie aus Aluminium oder Stahl verschweisst. Vorzugsweise werden Reibelement verwendet die bereits bekannten Geometrien aufweisen.

Beim Einsatz des Fügens durch Reibpunktschweissen wird kein Fügehilfselement verwendet. Vielmehr wird das Mg-Strukturbauteil und das Bauteil der Vorderwagenkarosserie aus Aluminium oder Stahl aneinander bzw. überlappend platziert und mit Hilfe eines Reibwerkzeugs miteinander verbunden. Das Reibpunktschweissen kann mit und ohne Endloch ausgeführt werden.

Beim Einsatz des Fügens durch Reibrührschweissen wird ebenfalls kein Fügehilfselement verwendet. Das Mg-Strukturbauteil und das Bauteil der Vorderwagenkarosserie aus Aluminium oder Stahl werden aneinander platziert und mit Hilfe eines rotierenden Werkzeugs entlang der Fügelinie miteinander verbunden.

Beim Einsatz des Fügens durch Fliesslochschrauben wird das Mg-Strukturbauteil und das Bauteil der Vorderwagenkarosserie aus Aluminium oder Stahl aneinander bzw. überlappend angeordnet und mit einer Fliesslochbohrschraube miteinander verbunden, wobei das Mg-Strukturbauteil dazu vorgelocht sein kann oder nicht.

Gemäss einer bevorzugten Ausführungsform wird beim Widerstandselementschweissen oder beim Reibelementschweissen ein abriebfestbeschichtetes Fügehilfselement verwendet. Vorzugsweise ist das abriebfestbeschichtete Fügehilfselement mit einer Zink oder Zink-Nickel oder Zink-Aluminium-Zinn-Beschichtung beschichtet.

Als vorteilhaft hat sich gezeigt, wenn das Mg-Strukturbauteil eine Federbeinstütze ist.

Die erfindungsgemässe Baugruppe einer Vorderwagenstruktur eines Kraftfahrzeugs beinhaltend ein Strukturbauteil aus einer Magnesiumlegierung im Druckgussverfahren hergestellt und mindestens ein Bauteil der Vorderwagenkarosserie, wobei das Bauteil der Vorderwagenkarosserie aus Aluminium oder Stahl hergestellt ist. Das Mg-Strukturbauteil ist mittels eines Fügeverfahrens direkt mit dem Bauteil der Vorderwagenkarosserie aus Aluminium oder Stahl verbunden. Dies bringt den Vorteil mit sich, dass ein leichtes Mg-Strukturbauteil direkt ohne Zwischenbauteile mit den tragenden Bauteilen der Vorderwagenkarosserie verbunden ist, wodurch weitere Bauteile vermieden werden können und eine hohe Gewichtsersparnis erzielt wird.

Als bevorzugte Ausführungsform hat sich gezeigt, wenn das Mg-Strukturbauteil eine integral angeordnete Verbindungshilfsstruktur aufweist, wobei die Verbindungshilfsstruktur zum Verbinden mit dem Bauteil der Vorderwagenkarosserie aus Aluminium oder Stahl dient. Dadurch ist am Mg-Strukturbauteil direkt eine Verbindungshilfsstruktur angeordnet bzw. daran angegossen/angeformt mit der das Mg-Strukturbauteil am Bauteile der Vorderwagenkarosserie aus Aluminium oder Stahl verbunden wird, mittels einem der vorgenannten Fügeverfahren.

Es ist vorteilhaft wenn das Mg-Strukturbauteil Rippen zur Versteifung aufweist. Zudem ist es auch von Vorteil, wenn das Strukturbauteil eine Wandstärke von 1-4 mm aufweist, besonders bevorzugt 1.2 - 2.8 mm.

Als bevorzugte Ausführungsform des Mg-Strukturbauteils hat sich gezeigt, wenn das Mg-Strukturbauteil beschichtet ist, vorzugsweise mit einer Pulverbeschichtung die dem Steinschlagschutz dient.

Als bevorzugte Ausführungsform hat sich gezeigt, wenn das Mg-Strukturbauteil als Federbeinstütze ausgebildet ist.

Alle Ausgestaltungmöglichkeiten sind untereinander frei kombinierbar. Sowie die Merkmale die auf das Verfahren gerichtet sind, sich auch auf die Baugruppe beziehen und umgekehrt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: das erfindungsgemässe Verfahren mit dem Widerstandselementeschweissen als Fügeverfahren,
- Fig. 2: das erfindungsgemässe Verfahren mit dem Reibelementeschweissen als Fügeverfahren,
- Fig. 3: das erfindungsgemässe Verfahren mit dem Reibpunktschweissen als Fügeverfahren,
- Fig. 4: das erfindungsgemässe Verfahren mit dem Reibrührschweissen als Fügeverfahren,
- Fig. 5: das erfindungsgemässe Verfahren mit dem Fliesslochschrauben als Fügeverfahren und
- Fig. 6: ein Mg-Strukturbauteil wobei als Strukturbauteil eine Federbeinstütze gezeigt ist.

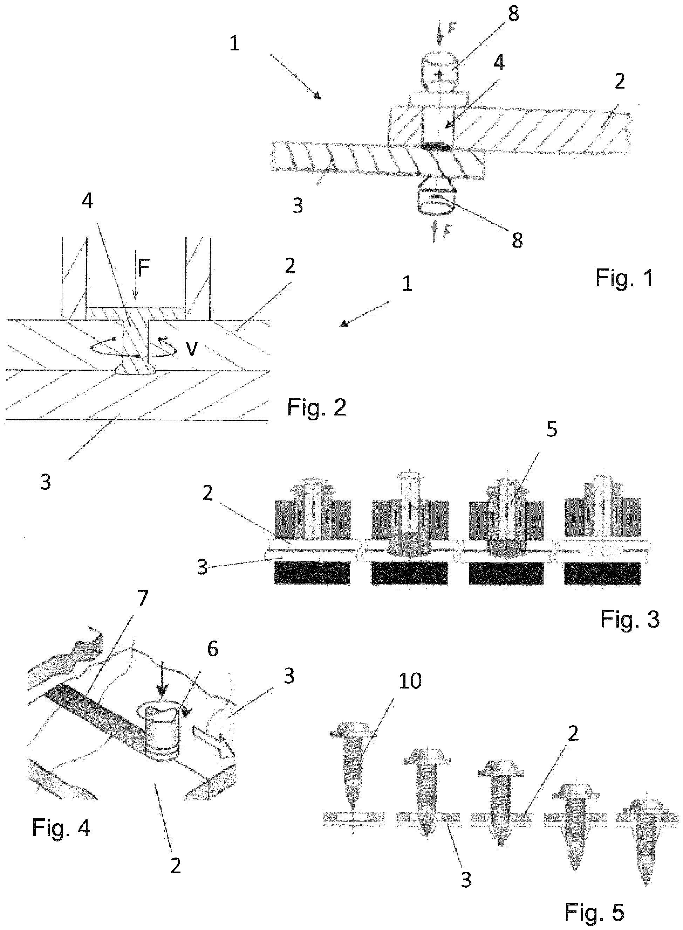

Die in Fig. 1 dargestellte Zeichnung zeigt das erfindungsgemässe Verfahren zur Verbindung einer Baugruppe 1 mittels des Widerstandselementschweissens. Das erfindungsgemässe Verfahren bezieht sich auf ein Mg-Strukturbauteil 2 das mittels Druckgussverfahren hergestellt wurde und nach dem Druckgiessen mittels eines Bauteils 3 der Vorderwagenkarosserie verbunden wird, wobei das Bauteil der Vorderwagenkarosserie aus Aluminium oder Stahl ist. In den dargestellten Figuren 1-5 sind die möglichen Verbindungsverfahren abgebildet, die ein solches Verbinden ermöglichen. In Fig. 1 ist das Widerstandselementschweissen aufgezeigt bei dem mittels des Schweisswerkzeugs nach dem Einbringen des Fügehilfselements 4 in das Mg-Strukturbauteil 2, das Mg-Strukturbauteil 2 und das Bauteil 3 der Vorderwagenkarosserie aus Aluminium oder Stahl aneinandergelegt bzw. bereichsweise überlappend angeordnet werden. Im Bereich des eingepressten Fügehilfselements 4, welcher überlappend mit dem Bauteil der Vorderwagenkarosserie ist, wird dann mittels eines Schweisswerkzeuges 8 die Verschweissung durchgeführt.
Fig. 2 zeigt die Anwendung Reibelementschweissens 4, wobei auch hier ein Fügehilfselement 4 verwendet wird. Wie beim Widerstandselementschweissen aus Fig. 1 wird auch hier ein bereits aus dem Stand der Technik bekanntes Fügehilfselement 4 verwendet. Beim Reibelementschweissen wird durch das rotieren des Fügehilfselements 4 das Mg-Strukturbauteil 2 durchdrungen und verbindet sich dann mit dem darunter angeordneten Bauteil 3 aus Aluminium oder Stahl der Vorderwagenkarosserie.
Fig. 3 zeigt das Reibpunktschweissen. Beim Reibpunktschweissen wird kein Fügehilfselement verwendet, sondern ausschliesslich mit dem rotierenden Reibwerkzeug 5 die beiden Teile miteinander verschweisst. Auch hier ist gut zu erkennen wie bei den anderen Verbindungsverfahren, dass das Mg-Strukturbauteil direkt mit dem Teil aus Stahl oder Aluminium verschweisst wird und keine Übergangsteile benötigt werden. Fig. 4 zeigt das Rührreibschweissen mit der ersichtlichen Fügelinie 7 und das Stoss an Stoss zusammengefügte Mg-Strukturbauteil 2 und das Bauteil 3 aus Stahl oder Aluminium. Fig. 5 zeigt die Verbindungsvariante mit den Fliesslochschrauben 10 bei dem die beiden Teile 2, 3 mit den unterschiedlichen Materialen miteinander verschraubt werden.

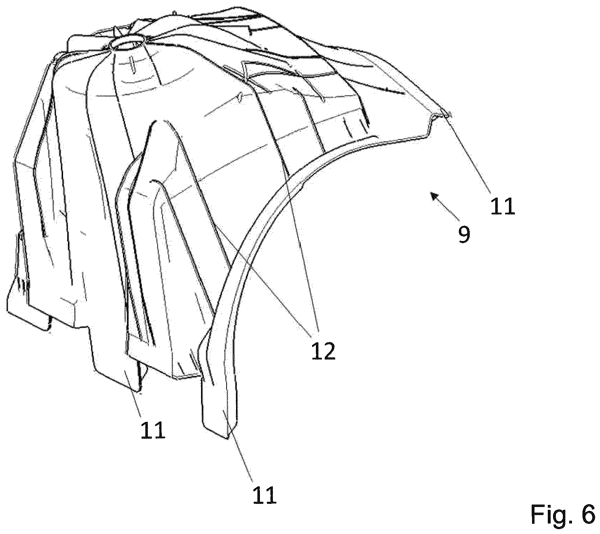

In Fig. 6 ist ein Mg-Strukturbauteil 2 abgebildet das als Federbeinstütze 9 ausgebildet ist. Gut ersichtlich sind die integral, ans Mg-Strukturbauteil 2, 9 angebrachten Verbindungshilfsstrukturen 11. Die Verbindungshilfsstrukturen 11 sind direkt am Strukturbauteil mit angegossen bzw. das Mg-Strukturbauteil 2 so entwickelt, dass es mit den Verbindungshilfsstrukturen 11 als einteiliges Druckgussbauteil ausgebildet ist. Diese laschenartigen Verbindungshilfsstrukturen 11 dienen dem überlagerten oder Stoss an Stoss Anbringen an das Bauteil 3 aus Stahl oder Aluminium.

### Bezugszeichenliste

- 1: Baugruppe
- 2: Mg-Strukturbauteil
- 3: Bauteile der Vorderwagenkarosserie aus Aluminium oder Stahl
- 4: Fügehilfselement
- 5: Reibwerkzeug
- 6: Reibrührwerkzeug
- 7: Fügelinie
- 8: Schweisswerkzeug
- 9: Federbeinstütze
- 10: Fliesslochschraube
- 11: Verbindungshilfsstruktur
- 12: Rippe

## Patentansprüche

1. Verfahren zum Verbinden von Strukturbauteilen(2) in einer Vorderwagenstruktur, wobei das Strukturbauteil (2) als Mg-Strukturbauteil (2) ausgebildet ist und im Mg-Druckgussverfahren hergestellt und mit mindestens einem Bauteil (3) der Vorderwagenkarosserie verbunden wird, wobei die Bauteile (3) der Vorderwagenkarosserie aus Aluminium oder Stahl gebildet sind, **dadurch gekennzeichnet, dass** das Mg-Strukturbauteil (2) direkt mit dem Bauteil (3) der Vorderwagenkarosserie aus Aluminium oder Stahl durch ein Fügeverfahren verbunden wird.

2. Verfahren nach Anspruch 1, **dadurch gekennzeichnet, dass** als Fügeverfahren zwischen dem Mg-Strukturbauteil (2) und dem Bauteil (3) der Vorderwagenkarosserie aus Aluminium oder Stahl ein Widerstandselementschweissen oder Reibelementschweissen oder Reibpunktschweissen oder Reibrührschweissen oder Fliesslochschrauben angewandt wird.

3. Verfahren nach Anspruch 2, **dadurch gekennzeichnet, dass** beim Widerstandselementschweissen oder Reibelementschweissen ein abriebfestbeschichtetes Fügehilfselement (4) verwendet wird.

4. Verfahren nach einem der Ansprüche 1 bis 3, **dadurch gekennzeichnet, dass** das Mg-Strukturbauteil (2) eine Federbeinstütze (9) ist.

5. Baugruppe (1) einer Vorderwagenstruktur eines Kraftfahrzeugs beinhaltend ein Strukturbauteil (2) aus einer Magnesiumlegierung im Druckgussverfahren hergestellt und mindestens ein Bauteil (3) der Vorderwagenkarosserie, wobei das Bauteil der Vorderwagenkarosserie aus Aluminium oder Stahl hergestellt ist, **dadurch gekennzeichnet, dass** das Mg-Strukturbauteil (2) mittels eines Fügeverfahrens nach einem der Ansprüche 1 bis 4 direkt mit dem Bauteil (3) der Vorderwagenkarosserie aus Aluminium oder Stahl verbunden ist.

6. Baugruppe nach Anspruch 5, **dadurch gekennzeichnet, dass** das Mg-Strukturbauteil (2) eine integral angeordnete Verbindungshilfsstruktur (11) aufweist, wobei die Verbindungshilfsstruktur (11) zum Verbinden mit dem Bauteil (3) der Vorderwagenkarosserie aus Aluminium oder Stahl dient.

7. Baugruppe (1) nach einem der Ansprüche 5 oder 6, **dadurch gekennzeichnet, dass** das Mg-Strukturbauteil (2) Rippen (12) zur Verstärkung aufweist.

8. Baugruppe (1) nach einem der Ansprüche 5 bis 7, **dadurch gekennzeichnet, dass** das Mg-Strukturbauteil (2) eine Wandstärke von 1 - 4 mm aufweist, vorzugsweise 1.2 - 2.8 mm.

9. Baugruppe (1) nach einem der Ansprüche 5 bis 8, **dadurch gekennzeichnet, dass** das Mg-Strukturbauteil (2) eine Korrosionsbeschichtung aufweist, vorzugsweise eine Pulverbeschichtung.

10. Baugruppe (1) nach einem der Ansprüche 5 bis 9, **dadurch gekennzeichnet, dass** das Mg-Strukturbauteil (2) als Federbeinstütze (9) ausgebildet ist.
